# FASCICULE DE BREVET EUROPEEN

(11) **EP 4 561 869 B1**
(45) Date de publication et mention de la délivrance du brevet: **15.04.2026**
(21) Numéro de dépôt: 23731330.9
(22) Date de dépôt: 01.06.2023
(51) Int. Cl.: B60R 16/02, H01M 50/20

(54) **GOULOTTE DE CABLAGE POUR PRE FIXATION D'UNE BATTERIE AUTOMOBILE**
KABELKANAL ZUR VORFIXIERUNG EINER FAHRZEUGBATTERIE
CABLE TRAY FOR PRE-FIXING A CAR BATTERY

(30) Priorité: 29.07.2022 FR 2207863
(43) Date de publication de la demande: 04.06.2025
(73) Titulaire: Stellantis Auto SAS, 78300 Poissy (FR)
(72) Inventeur: CONVERS, Germain, 70290 Champagney (FR); ORCHAMPT, Sebastien, 70270 Fresse (FR)
(74) Mandataire: PSIP
(86) Numéro de dépôt international: PCT/FR2023/050764
(87) Numéro de publication internationale: WO 2024/023406

(56) Documents cités:
- DE-A1- 102013 009 713
- DE-B4- 102020 101 867
- FR-B1- 2 995 965
- FR-B1- 3 095 843

## Description

L'invention concerne une goulotte de câblage pour pré fixation d'une batterie pour véhicule automobile à motorisation électrique et/ou hybride.

De manière générale, un faisceau passe au-dessus de la batterie en sortie de chargeur pour alimenter le moteur. Le faisceau étant fixé sur le moteur électrique du véhicule, il n'est pas pratique de démonter le moteur pour démonter la batterie. Il est donc nécessaire de pouvoir démonter la batterie sans avoir à démonter le faisceau. Il existe de multiples solutions. On connait de l'art antérieur, le document FR 3 095 843B1 qui concerne une agrafe à rattrapage de jeu pour la fixation de pièces telles que des goulottes ou des boîtiers sur des goujons solidaires de la caisse de véhicules automobiles.

On connait également le document FR 2 995 965B1 qui concerne un dispositif de montage d'une goulotte de câblage sur une pièce de carrosserie automobile.

En outre, l'état de la technique est également connu des documents DE 10 2020 101867 B4 et DE 10 2013 009713 A1.

D'autres solutions existent telles que des goulottes fixées sur batterie avec un système de fixation de type vis ou rivet. Ces méthodes ne sont cependant pas toujours compatibles car les goulottes ne sont pas démontables et la mise en place de celles-ci nécessite deux personnes (incompatible de prendre une visseuse et de maintenir la goulotte à une main).

L'invention vise donc à proposer une solution qui pallie au moins à l'un de ces inconvénients.

A cet effet, l'invention concerne une goulotte de câblage pour pré fixation d'une batterie pour véhicule automobile, ladite goulotte ayant une forme longiligne, ladite goulotte comprenant selon l'invention, en chacune de ses extrémités:
- au moins un moyen de fixation sur un support,
- au moins un moyen de clipsage ayant sensiblement une forme de U, ledit moyen de clipsage étant destiné à recevoir un élément profilé de la batterie automobile,
- sur deux faces externes opposés, des moyens de positionnement de ladite goulotte sur le support et de ladite batterie sur la goulotte,
et lorsque la batterie automobile est posée en force contre ladite goulotte, lesdits moyens de positionnement sont mis sous pression et chaque élément profilé vient se clipser dans chaque moyen de clipsage, pré fixant la position de ladite batterie automobile.

L'invention correspond à une goulotte clipsée sur une batterie automobile. En effet, la batterie est maintenue contre la goulotte avec des éléments de positionnement et des moyens de clipsage offrant la possibilité d'un démontage de celle-ci sans démonter les faisceaux. On entend par « batterie », un ensemble de batterie dans un coffret ou boitier par exemple. La batterie est pré fixée sur la goulotte et s'étend longitudinalement selon l'axe X d'un véhicule selon un référentiel X, Y et Z classique d'un véhicule. La goulotte selon l'invention permet également le passage de différents tubes ou câbles tels que des tubes de frein par exemple. La position de la goulotte sur la batterie est assurée via les moyens de clipsage et permet de garantir que les tubes de frein ne viennent pas en contact de la tôle (jeu inférieur à 10mm). Comme tout l'ensemble est prévu d'être coiffé en automatique sous caisse lors du montage, l'invention permet une fixation du faisceau garantissant le montage de ce dernier en bonne position et également le démontage de la batterie en après-vente sans dépose du faisceau.

L'invention permet alors un gain de temps de travail en après-vente pour le démontage de la batterie sans dépose du bloc avant du véhicule.

L'invention permet également de sécuriser le risque de coût après-vente, soit un gain économique. En effet, si une crise qualité concernant les batteries apparait, l'invention permet d'éviter le besoin du démontage du bloc avant. Cela évite également l'ajout d'un opérateur pour le vissage de la goulotte sur la batterie et évite de réduire le volume de la batterie pour implanter des fixations et le passage des outils (soit une estimation de gain de 50km d'autonomie pour la batterie).

Les moyens de positionnement peuvent être en mousse. Une disposition de mousses sur et sous la goulotte permet de garantir la position en Z en fin de montage de la batterie sur la goulotte. La goulotte est alors bloquée entre le support et la batterie. En phase de coiffage, le support (au-dessus) et la batterie (en-dessous) compressent les moyens de positionnement pour recentrer la goulotte en bonne position. On entend par « mousse », une mousse souple qui présente une flexibilité ou une élasticité. Celle-ci est par exemple dans un matériau élastomère et par conséquent ladite mousse est compressible.

L'au moins un moyen de clipsage peut comprendre au moins un élément de renforcement. L'élément de renforcement permet d'amener plus de raideur au moyen de clipsage et par conséquent de le rendre plus solide et rigide.

L'au moins un moyen de clipsage peut comprendre 3 mm de jeu entre une face dudit moyen de clipsage et une face de la batterie automobile. Cela permet d'assurer le bon positionnement de la goulotte selon un axe X du moyen de clipsage lorsque la batterie vient être clipsée. Ce sont les surfaces des moyens de clipsage qui sont en face de la batterie qui vont faire office de butée. Trois mm de jeu ont été laissé afin d'absorber les tolérances de forme en X de la goulotte.

L'au moins un moyen de clipsage peut comprendre 1 mm de jeu entre l'élément profilé de la batterie et chacune des faces intérieures parallèles de la forme de U dudit moyen de clipsage. Cela permet d'assurer le bon positionnement de la goulotte selon un axe Y du moyen de clipsage lorsque la batterie vient être clipsée. Ce sont les surfaces internes des moyens de clipsage qui vont faire office de butée. Un mm de jeu a été laissé sur chaque moyen de clipsage afin d'absorber les tolérances de forme en Y de la goulotte.

L'au moins un moyen de clipsage peut comprendre 3 mm de jeu entre l'élément profilé de la batterie et une zone supérieure de la forme de U dudit moyen de clipsage. Cela permet d'assurer le bon positionnement de la goulotte selon un axe Z du moyen de clipsage lorsque la batterie vient être clipsée. C'est la surface interne de la forme de U des moyens de clipsage qui va faire office de butée. Trois mm de jeu ont été laissé sur chaque moyen de clipsage afin d'absorber les tolérances de forme en Z de la goulotte. De manière générale, lors du montage de la goulotte sur la batterie, le faisceau se soulève, subissant les contraintes du clipsage du faisceau (très rigide) sur le support à l'avant. Avec un simple clip le monteur devrait appliquer un très grand effort pour comprimer les éléments de positionnement sous la goulotte, avec le risque que celle-ci se déclipe avant le coiffage. Selon l'invention, grâce à l'allongement en Z du moyen de clipsage, l'effort de clipsage pour les monteurs est réduit tout en garantissant la position dans les tolérances définies.

Par conséquent, chaque moyen de clipsage permet de rendre la goulotte compatible de chaque contrainte.

La goulotte peut être positionnée selon un axe X ou selon un axe Y d'un véhicule automobile.

D'autres caractéristiques et avantages de la présente invention apparaîtront plus clairement à la lecture de la description illustrée par les dessins annexés, dans lesquels les figures représentent :
[Fig. 1] illustre une vue générale d'une goulotte de câblage selon l'invention,
[Fig. 2] illustre une vue générale d'une goulotte de câblage selon l'invention clipsée sur une batterie automobile,
[Fig. 3] illustre une vue générale de deux moyens de clipsage selon l'invention,
[Fig. 4] illustre une vue de face d'un moyen de clipsage selon l'invention,
[Fig. 5] illustre une vue de profil d'un moyen de clipsage selon l'invention.

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

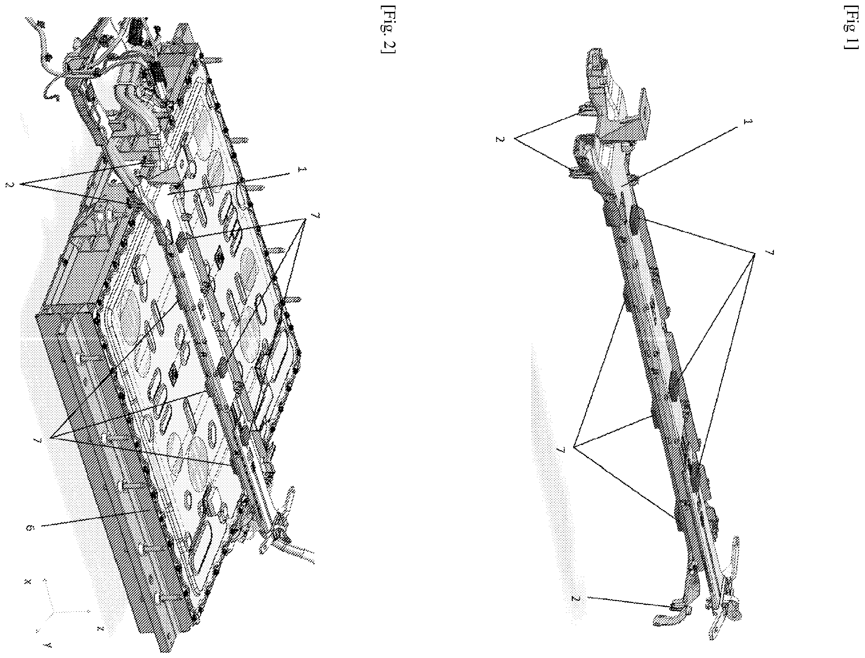

On va tout d'abord décrire, en référence à la figure 1, une vue générale d'une goulotte de câblage selon l'invention. La goulotte 1 est de forme longiligne et plus particulièrement de forme sensiblement rectangulaire. La goulotte 1 comprend des moyens de positionnement 7 et au moins un moyen de clipsage 2. Les moyens de positionnement 7 sont en mousse. La goulotte 1 comprend également au moins un moyen de fixation sur un support. Le support correspond au plancher avant d'un véhicule automobile par exemple. Le support se situe au-dessus de la goulotte 1 (non représenté).

La figure 2 présente une vue générale d'une goulotte 1 de câblage selon l'invention clipsée sur une batterie 6 automobile via les moyens de clipsage 2. En phase de coiffage, le support (au-dessus, non représenté) et la batterie 6 (en-dessous) compressent les éléments de positionnement 7 pour recentrer la goulotte en bonne position. Ils sont alors mis sous pression.

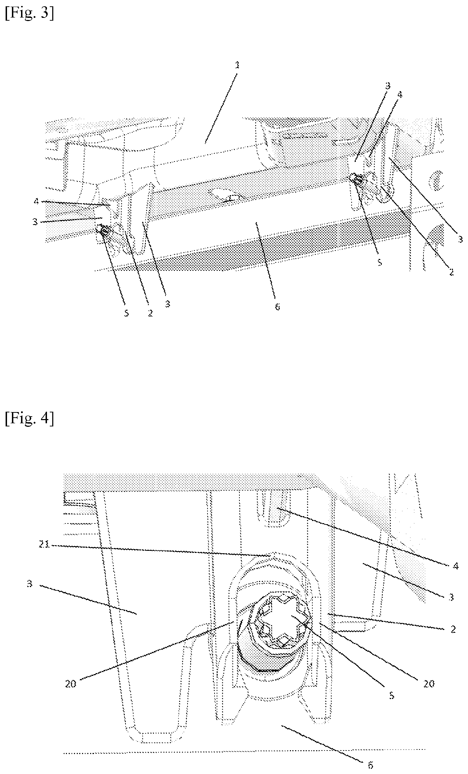

On va maintenant décrire en référence à la figure 3, une vue générale de deux moyens de clipsage 2 selon l'invention. La figure 3 présente une des extrémités de la goulotte 1. L'extrémité comprend deux moyens de clipsage 2. Chaque moyen de clipsage 2 est fixé sur la goulotte 1 par une partie supérieure dudit moyen de clipsage 2. La goulotte 1 et les moyens de clipsage 2 sont fabriqués dans le même matériau. Chaque moyen de clipsage 2 comprend une ouverture dans sa partie inférieure donnant sensiblement une forme de U audit moyen de clipsage 2. Chaque moyen de clipsage 2 comprend également des éléments de renforcement 3 et 4. L'élément de renforcement 3 correspond à une ailette fixée audit moyen de clipsage 2. Un élément de renforcement 3 se trouve de chaque côté du moyen de clipsage 2. L'élément de renforcement 4 correspond à une pièce, ici de forme triangulaire positionnée perpendiculairement au moyen de clipsage 2 et de manière centrée. Les éléments de renforcement 3 et 4 sont fixés au moyen de clipsage 2 ainsi qu'à la goulotte 1. Chaque moyen de clipsage 2 comprend ici deux éléments de renforcement 4, un positionné sur la face avant (face visible sur la figure 3) et un sur la face arrière dudit moyen de clipsage 2 (face non visible sur la figure 3). La face arrière de chaque moyen de clipsage 2 fait face à une des faces latérales de la batterie 6. On peut également voir que la batterie est pré fixée à ladite goulotte 1 comme présenté sur la figure 2 puisque chaque moyen de clipsage 2 entoure un élément profilé 5 de type goujon fixé à la batterie 6.

On va maintenant décrire en référence à la figure 4, une vue de face d'un moyen de clipsage selon l'invention. Comme présenté à la figure 3, le moyen de clipsage 2 comprend des éléments de renforcement 3 et sensiblement une forme de U. Ladite forme de U définit deux faces intérieures parallèles 20, et une zone supérieure 21. L'élément profilé 5 est clipsé dans le moyen de clipsage 2. Un jeu de 1 mm a été laissé entre l'élément profilé 5 et les deux faces intérieures parallèles 20 du moyen de clipsage 2. De plus, un jeu de 3 mm a été laissé entre l'élément profilé 5 et la zone supérieure 21 du moyen de clipsage 2.

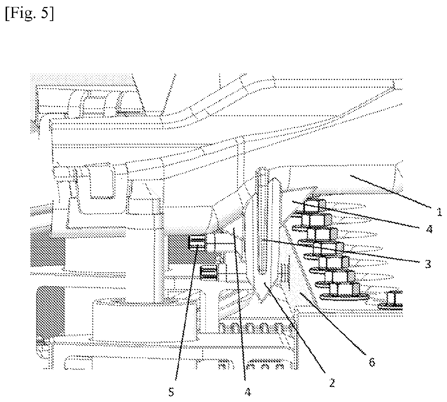

On va maintenant décrire en référence à la figure 5, une vue de profil d'un moyen de clipsage selon l'invention. Le moyen de clipsage comprend une face avant et une face arrière (face coté batterie). Un jeu de 3 mm a été laissé entre la face arrière dudit moyen de clipsage 2 et la face latérale de la batterie 6 lui faisant face.

Bien sûr, l'invention n'est pas limitée aux exemples qui viennent d'être décrits et de nombreux aménagements peuvent être apportés à ces exemples sans sortir du cadre de l'invention. Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Goulotte de câblage pour pré fixation d'une batterie automobile, ladite goulotte (1) ayant une forme longiligne, **caractérisé en ce que** ladite goulotte (1) comprend, en chacune de ses extrémités:
- au moins un moyen de fixation sur un support,
- au moins un moyen de clipsage (2) ayant sensiblement une forme de U, ledit moyen de clipsage (2) étant destiné à recevoir un élément profilé (5) de la batterie automobile (6),
- sur deux faces externes opposés, des moyens de positionnement (7) de ladite goulotte (1) sur le support et de ladite batterie (6) sur la goulotte (1),
Et **en ce que**, lorsque la batterie (6) automobile est posée en force contre ladite goulotte (1), lesdits moyens de positionnement (7) sont mis sous pression et chaque élément profilé (5) vient se clipser dans chaque moyen de clipsage (2), pré fixant la position de ladite batterie (6) automobile.

2. Goulotte selon la revendication 1, dans laquelle les moyens de positionnement (7) sont en mousse.

3. Goulotte selon l'une quelconque des revendications précédentes, dans laquelle l'au moins un moyen de clipsage (2) comprend au moins un élément de renforcement (3,4).

4. Goulotte selon l'une quelconque des revendications précédentes, dans laquelle l'au moins un moyen de clipsage (2) comprend 3 mm de jeu entre une face dudit moyen de clipsage et une face de la batterie (6) automobile.

5. Goulotte selon l'une quelconque des revendications précédentes, dans laquelle l'au moins un moyen de clipsage (2) comprend 1 mm de jeu entre l'élément profilé (5) de la batterie (6) et chacune des faces intérieures parallèles (20) de la forme de U dudit moyen de clipsage (2).

6. Goulotte selon l'une quelconque des revendications précédentes, dans laquelle l'au moins un moyen de clipsage (2) comprend 3 mm de jeu entre l'élément profilé (5) de la batterie (6) et une zone supérieure (21) de la forme de U dudit moyen de clipsage (2).

7. Goulotte selon l'une quelconque des revendications précédentes, dans laquelle la goulotte (1) est positionnée selon un axe X ou selon un axe Y d'un véhicule automobile.

## Patentansprüche

1. Kabelkanal zur Vorfixierung einer Fahrzeugbatterie, wobei der Kabelkanal (1) eine längliche Form aufweist, **dadurch gekennzeichnet, dass** der Kabelkanal (1) an jedem seiner Enden umfasst:
• mindestens ein Befestigungsmittel zur Befestigung an einem Träger,
• mindestens ein Clipmittel (2) mit im Wesentlichen U-förmiger Gestalt, wobei das Clipmittel (2) dazu bestimmt ist, ein Profilelement (5) der Fahrzeugbatterie (6) aufzunehmen,
• an zwei gegenüberliegenden Außenflächen Positionierungsmittel (7) des Kabelkanals (1) auf dem Träger und der Batterie (6) auf dem Kabelkanal (1),
Und dadurch, dass, wenn die Fahrzeugbatterie (6) kraftschlüssig gegen den Kabelkanal (1) gedrückt wird, die Positionierungsmittel (7) unter Druck gesetzt werden und jedes Profilelement (5) in jedes Clipmittel (2) einclipst, wodurch die Position der Fahrzeugbatterie (6) vorfixiert wird.

2. Kabelkanal nach Anspruch 1, wobei die Positionierungsmittel (7) aus Schaum bestehen.

3. Kabelkanal nach einem der vorhergehenden Ansprüche, wobei das mindestens eine Clipmittel (2) mindestens ein Verstärkungselement (3,4) umfasst.

4. Kabelkanal nach einem der vorhergehenden Ansprüche, wobei das mindestens eine Clipmittel (2) ein Spiel von 3 mm zwischen einer Fläche des Clipmittels und einer Fläche der Fahrzeugbatterie (6) aufweist.

5. Kabelkanal nach einem der vorhergehenden Ansprüche, wobei das mindestens eine Clipmittel (2) ein Spiel von 1 mm zwischen dem Profilelement (5) der Batterie (6) und jeweils einer der parallelen Innenflächen (20) der U-Form des Clipmittels (2) aufweist.

6. Kabelkanal nach einem der vorhergehenden Ansprüche, wobei das mindestens eine Clipmittel (2) ein Spiel von 3 mm zwischen dem Profilelement (5) der Batterie (6) und einem oberen Bereich (21) der U-Form des Clipmittels (2) aufweist.

7. Kabelkanal nach einem der vorhergehenden Ansprüche, wobei der Kabelkanal (1) entlang einer X-Achse oder entlang einer Y-Achse eines Kraftfahrzeugs positioniert ist.

## Claims

1. Wiring duct for pre-fixing an automotive battery, said duct (1) having an elongated shape, **characterized in that** said duct (1) comprises, at each of its ends:
• at least one fastening means for fastening to a support,
• at least one clipping means (2) having substantially a U-shape, said clipping means (2) being intended to receive a profiled element (5) of the automotive battery (6),
• on two opposite outer faces, positioning means (7) of said duct (1) on the support and of said battery (6) on the duct (1),
And **in that**, when the automotive battery (6) is force-fitted against said duct (1), said positioning means (7) are put under pressure and each profiled element (5) clips into each clipping means (2), pre-fixing the position of said automotive battery (6).

2. Duct according to claim 1, wherein the positioning means (7) are made of foam.

3. Duct according to any one of the preceding claims, wherein the at least one clipping means (2) comprises at least one reinforcing element (3,4).

4. Duct according to any one of the preceding claims, wherein the at least one clipping means (2) comprises a 3 mm clearance between one face of said clipping means and one face of the automotive battery (6).

5. Duct according to any one of the preceding claims, wherein the at least one clipping means (2) comprises a 1 mm clearance between the profiled element (5) of the battery (6) and each of the parallel inner faces (20) of the U-shape of said clipping means (2).

6. Duct according to any one of the preceding claims, wherein the at least one clipping means (2) comprises a 3 mm clearance between the profiled element (5) of the battery (6) and an upper zone (21) of the U-shape of said clipping means (2).

7. Duct according to any one of the preceding claims, wherein the duct (1) is positioned along an X-axis or along a Y-axis of a motor vehicle.
